# EUROPÄISCHE PATENTSCHRIFT

(11) **EP 3 374 797 B1**
(45) Veröffentlichungstag und Bekanntmachung des Hinweises auf die Patenterteilung: **17.05.2023**
(21) Anmeldenummer: 16782262.6
(22) Anmeldetag: 19.10.2016
(51) Int. Cl.: G01S 19/07, G01S 19/15, G08G 5/02

(54) **VERFAHREN UND VORRICHTUNG ZUM BEREITSTELLEN VON DATEN FÜR EINE SATELLITENNAVIGATION-BASIERTE AUTOMATISCHE LANDUNG AN EIN FLUGZEUG**
METHOD AND DEVICE FOR PROVIDING AN AIRCRAFT WITH DATA FOR A SATELLITE NAVIGATION-BASED AUTOMATIC LANDING
PROCÉDÉ ET DISPOSITIF DE FOURNITURE À UN AVION DE DONNÉES POUR UN ATTERRISSAGE AUTOMATIQUE, BASÉ SUR UNE NAVIGATION PAR SATELLITE

(30) Priorität: 10.11.2015 DE 102015119308
(43) Veröffentlichungstag der Anmeldung: 19.09.2018
(73) Patentinhaber: Deutsches Zentrum für Luft- und Raumfahrt e.V., 51147 Köln (DE)
(72) Erfinder: DAUTERMANN, Thomas, 38527 Meine OT Abbesbüttel (DE); GEISTER, Robert, 38527 Meine OT Abbesbüttel (DE); LUDWIG, Thomas, 38102 Braunschweig (DE)
(74) Vertreter: REHBERG HÜPPE + PARTNER
(86) Internationale Anmeldenummer: PCT/EP2016/075010
(87) Internationale Veröffentlichungsnummer: WO 2017/080763

(56) Entgegenhaltungen:
- TODD WALTER ET AL: "The Advantages of Local Monitoring and VHF Data Broadcast for SBAS", PROCEEDINGS OF THE EUROPEAN NAVIGATION CONFERENCE GNSS 2005, 19-22 JULY 2005, MUNICH, GERMANY, BONN : DGON , 19. Juli 2005 (2005-07-19), Seiten 1-15, XP002572970, Gefunden im Internet: URL:http://www.stanford.edu/ jwseo/publications/WalterENCGNSS05.pdf [gefunden am 2010-03-12]
- GRAEME K CROSBY ET AL: "A Ground-based Regional Augmentation System (GRAS) - The Australian Proposal", GPS 2000 - PROCEEDINGS OF THE 13TH INTERNATIONAL TECHNICAL MEETING OF THE SATELLITE DIVISION OF THE INSTITUTE OF NAVIGATION (ION GPS 2000), THE INSTITUTE OF NAVIGATION, 8551 RIXLEW LANE SUITE 360 MANASSAS, VA 20109, USA, 22. September 2000 (2000-09-22), Seiten 713-721, XP056002431,

## Beschreibung

### TECHNISCHES GEBIET DER ERFINDUNG

Die Erfindung bezieht sich auf ein Verfahren zum Bereitstellen von GLS (GBAS Landing System)-Datenpaketen für eine Satellitennavigation-basierte automatische Landung an ein Flugzeug, wobei die GLS-Datenpakete GBAS (Ground-Based Augmentation System)-Korrekturdaten für die Satellitennavigation und FAS (Final Approach Segment)-Daten, welche einen Sollanflugweg des Flugzeugs beschreiben, umfassen und über eine Funkstrecke an das Flugzeug übermittelt werden.

Weiterhin bezieht sich die Erfindung auf eine Vorrichtung zur Durchführung eines solchen Verfahrens mit einem Zusammenführer (Message Builder), der GBAS-Korrekturdaten für die Satellitennavigation und FAS-Daten zu einem Sollanflugweg umfassende GLS-Datenpakete für eine Satellitennavigation-basierte automatische Landung eines Flugzeugs zusammenführt, und einem Sender, der die GLS-Datenpakete über eine Funkstrecke an das Flugzeug übermittelt.

### STAND DER TECHNIK

Bei einer GNSS (Global Navigation Satellite System)-Satellitennavigation können Positionsfehler von vielen Metern auftreten, wenn nur die Laufzeiten der von den GNSS-Satelliten ausgesandten GNSS-Signale ausgewertet werden. Diese Fehler beruhen auf verschiedenen Ursachen, wie atmosphärischen Schwankungen, variierenden Positionen der GNSS-Satelliten und Ungenauigkeiten bei der Signalerzeugung.

Beim GBAS (Ground-Based Augmentation System) werden die von den verschiedenen GNSS-Satelliten ausgesandten GNSS-Signale von Referenzempfängern mit genau bekannten Positionen empfangen. Aus dem Vergleich von gemessenen Entfernungen zu den Satelliten, die aus den GNSS-Signalen bestimmt werden, und den tatsächlichen Positionen, an denen die GNSS-Signale empfangen wurden, werden GBAS-Korrekturdaten bestimmt, die in einem Umkreis von typischerweise 50 km Gültigkeit haben. Mit diesen Korrekturen wird es anderen Empfängern der GNSS-Signale ermöglicht, ihre Position mit hoher Genauigkeit (im Bereich eines Meters) aus den von den GNSS-Satelliten empfangenen GNSS-Signalen zu bestimmen. So kann beispielsweise ein Flugzeug, wenn ihm derartige GBAS-Korrekturdaten zur Verfügung stehen, seine Position in allen Raumrichtungen ausreichend genau bestimmen, um eine Satellitennavigation-basierte automatische Landung auszuführen.

Beim GLS (GBAS Landing System) werden einem Flugzeug für eine Satellitennavigation-basierte automatische Landung GLS-Datenpakete übermittelt, die neben am Boden bestimmten GBAS-Korrekturdaten FAS (Final Approach Segment)-Daten, welche einen Sollanflugweg beschreiben, umfassen. Die GLS-Datenpakete werden beim GLS von einem Sender am Boden einem Empfänger in dem Flugzeug über eine VHF-Funkstrecke übermittelt und von dem Empfänger direkt in den Autopiloten des Flugzeugs geleitet. Dem Autopiloten stehen so zusammen mit dem GNSS des Flugzeugs alle Informationen für die automatische Satellitennavigation-basierte Landung zur Verfügung.

Der Aufwand für die Installation eines GLS an einem Flughafen ist wegen der Notwendigkeit, Referenzempfänger an bekannten Positionen vorzusehen und miteinander und mit einer Zentraleinheit zu verknüpfen, nicht unerheblich.

Beim sogenannten SBAS (Satellite-Based Augmentation System) werden SBAS-Korrekturdaten für die GNSS-Satellitennavigation direkt von einem dedizierten, speziellen geostationären Satelliten ausgesandt. Diese SBAS-Korrekturdaten haben Gültigkeit für ein größeres Gebiet. Sie erlauben eine annähernd so gute Positionsbestimmung bei der Satellitennavigation wie das GBAS.

Um das SBAS für eine Positionsbestimmung von Flugzeugen, muss in dem jeweiligen Flugzeug ein spezieller Empfänger für die SBAS-Korrekturdaten vorgesehen werden. Weiterhin müssen Datenverbindungen vorgesehen werden, über die dem Autopiloten des Flugzeugs Abweichungen von Sollflugpfad zur Verfügung gestellt werden. Dazu benötigt ein Gerät, welches die Abweichungen vom Sollflugpfad berechnet, FAS-Daten zu dem jeweiligen Sollanflugweg. Hierfür wird eine entsprechende Datenbank in dem Flugzeug vorgesehen, da die FAS-Daten dem Flugzeug nicht separat von außen übermittelt werden. Alle diese Datenübertragungswege und Einrichtungen müssen förmlich zugelassen werden. Es ist gegenwärtig nicht möglich, automatisierte Präzisionsanflüge basierend auf einer SBAS gestützten Positionsberechnung bis zur automatischen Landung fortzusetzen, da die bordseitige Datenbank, sowie die Verbindung von der Datenbank zum Autopilot den formellen Zulassungsansprüchen nicht genügt. Vielmehr wird die Automatisierung von SBAS-Präzisionsanflügen in einer Höhe vom 250 Fuß abgebrochen.

Die DE 10 2012 007 202 B4 offenbart ein Verfahren und eine Vorrichtung zum Erzeugen von Integritätsinformationen zum Erfüllen erhöhter Integritätsanforderungen bei einer GNSS-basierten Positionsbestimmung. Das Verfahren umfasst das Berechnen von möglichen Positionsbiaswerten bedingt durch die Kombination von Biaswerten von Fehlerverteilungen von GNSSbasierten Pseudoentfernungsmessungen in einem bestimmten Gebiet über eine Projektion mit einer Designmatrix für das bestimmte Gebiet und das Erzeugen der Integritätsinformationen zum Erfüllen erhöhter Integritätsanforderungen durch Subtrahieren der ermittelten möglichen Positionsbiaswerte, bedingt durch die Kombination von Biaswerten, von Altert Limits. Die erzeugten Integritätsinformationen, das heißt die reduzierten Alert Limits und/oder erhöhte Protection Levels, können mit FAS-Datensets, die von an Flughäfen installierten Bodenstationen eines Erweiterungssystems oder mit den Signalen eines SBAS ausgesendet, verbreitet und so von in Flugzeugen installierten und geeigneten SBAS-Empfängern empfangen und ausgewertet werden. Alternativ können die reduzierten Alert Limits in einer Datenbank im Flight Management System des Flugzeugs abgelegt sein und so dem SBAS/GBAS-Empfänger und dem FMS zugänglich gemacht werden. Eine Vorrichtung zum Ausführen des Verfahrens kann in einer Bodenstation eines GBAS installiert sein, so dass durch die Bodenstation die Integritätsinformation in einem bestimmten Gebiet, wie beispielsweise einem Flughafen verbreitet werden können.

Aus der US 2013/0079958 A1 sind ein Verfahren und eine Vorrichtung zum Bestimmen der Position eines Flugzeugs während eines Landeanflugs bekannt, bei denen das Flugzeug während des Landeanflugs durch Positionsinformationen geführt wird, die von einem GNSS-Satellitennavigationssystem empfangen werden. Diese Informationen können mit Informationen von einem Unterstützungssystem, insbesondere einem SBAS, einem ABAS oder einem GBAS-System kombiniert werden.

Aus TODD WALTER ET AL: "The Advantages of Local Monitoring and VHF Data Broadcast for SBAS", PROCEEDINGS OF THE EUROPEAN NAVIGATION CONFERENCE GNSS 2005, 19-22 JULY 2005, MUNICH, GERMANY, BONN: DGON ist ein Verfahren zum Bereitstellen von GBAS-Korrekturdaten an ein Flugzeug bekannt, bei dem SBAS-Korrekturdaten empfangen und in die GBAS-Korrekturdaten umgewandelt werden. Diese werden dann zusammen mit FAS-Daten übermittelt.

Aus GRAEME K CROSBY ET AL: "A Ground-based Regional Augmentation System (GRAS) - The Australian Proposal", PROCEEDINGS OF THE 13TH INTERNATIONAL TECHNICAL MEETING OF THE SATELLITE DIVISION OF THE INSTITUTE OF NAVIGATION (ION GPS 2000), THE INSTITUTE OF NAVIGATION, 8551 RIXLEW LANE SUITE 360, MANASSAS, VA 20109 USA, 22. September 2000 (2000-09-22), Seiten 713-721, ist ein GRAS genanntes System bekannt, bei dem die Konzepte SBAS und GBAS gemischt werden. Dabei werden SBAS-Datenpakete an ein Netzwerk von terrestrischen Stationen für eine lokale Prüfung und Reformatierung übermittelt. Jeder Ort ermittelt dann ein GBAS-artiges Signal, das von Flugzeugen verwendet werden kann.

### AUFGABE DER ERFINDUNG

Der Erfindung liegt die Aufgabe zugrunde, an Flughäfen ohne GLS ohne großen Aufwand eine Satellitennavigation-basierte automatische Landung von Flugzeugen zu ermöglichen, die für das GLS eingerichtet und zugelassen sind.

### LÖSUNG

Die Aufgabe der Erfindung wird durch ein Verfahren mit den Merkmalen des unabhängigen Patentanspruchs 1 und eine Vorrichtung mit den Merkmalen des unabhängigen Patentanspruchs 4 gelöst. Die abhängigen Patentansprüche betreffen bevorzugte Ausführungsformen des erfindungsgemäßen Verfahrens und der erfindungsgemäßen Vorrichtung.

### BESCHREIBUNG DER ERFINDUNG

Bei einem erfindungsgemäßen Verfahren zum Bereitstellen von GLS (GBAS Landing System)-Datenpaketen für eine Satellitennavigation-basierte automatische Landung an ein Flugzeug, wobei die GLS-Datenpakete GBAS (Ground-Based Augmentation System)-Korrekturdaten für die Satellitennavigation, insbesondere die GNSS (Global Navigation Satellite System)-Satellitennavigation, und FAS (Final Approach Segment)-Daten, welche einen Sollanflugweg des Flugzeugs beschreiben, umfassen, werden SBAS (Satellite-Based Augmentation System)-Korrekturdaten für die Satellitennavigation von einem SBAS-Satelliten empfangen. Die empfangenen SBAS-Korrekturdaten werden in GBAS-Korrekturdaten umgewandelt. Die durch das Umwandeln der empfangenen SBAS-Korrekturdaten erhaltenen GBAS-Korrekturdaten werden mit den FAS-Daten zu den GLS-Datenpaketen zusammengeführt. Die GLS-Datenpakete werden über eine Funkstrecke an das Flugzeug übermittelt.

Im Flugzeug sind die diese GLS-Datenpakete nicht unterscheidbar von solchen, die Korrekturdaten enthalten, welche originär mit einem GBAS generiert wurden. Das Flugzeug, d. h. sein Autopilot, kann die GLS-Datenpakete für eine übliche GLS-Landung verwenden, d. h. für einen Präzisionsanflug, der bis zur endgültigen Landung des Flugzeugs fortgesetzt werden kann. Es bedarf hierfür keiner Änderungen in dem Flugzeug gegenüber einem schon bisher für GLS-Landungen hergerichteten und zugelassenen Flugzeug.

Die erfindungsgemäße Bereitstellung der GLS-Datenpakete, d. h. von Datenpaketen nach GLS-Standard, kommt zugleich ohne eine aufwändige Generierung von GBAS-Korrekturdaten mit einem üblichen GBAS, d. h. mit Hilfe von mehreren Referenzempfängern an festen Positionen, aus. Das erfindungsgemäße Verfahren kann vielmehr an einem einzigen Ort, dessen Position nicht genau bekannt sein muss, durchgeführt werden.

Es erweist sich weiterhin, dass die Umwandlung von SBAS-Korrekturdaten in GBAS-Korrekturdaten grundsätzlich problemlos ist. Eine Zulassung des erfindungsgemäßen Verfahrens für automatische Landungen von Flugzeugen sollte damit ebenfalls problemlos sein. Dabei sollte eine einmalige Zulassung des Verfahrens oder einer entsprechenden Vorrichtung ausreichen, also eine vom Ort der Anwendung der Erfindung unabhängige Zulassung möglich sein.

Beim Umwandeln der SBAS-Korrekturdaten in GBAS-Korrekturdaten werden Korrekturdaten ergänzt, die bei den Korrekturdaten nach SBAS-Standard fehlen. Diese fehlenden Korrekturdaten können z. B. durch Extrapolieren aus den vorhandenen SBAS-Korrekturdaten oder anderes Verarbeiten dieser vorhandenen SBAS-Korrekturdaten generiert werden.

Für die FAS-Daten, welche den Sollanflugweg des Flugzeugs beschreiben, können Rohdaten zu dem Sollanflugweg aus einem Wegdatenspeicher oder von einem Wegeingabegerät übernommen werden. Das Wegeingabegerät kann nicht nur dazu genutzt werden, einen völlig neuen Sollanflugweg einzugeben, sondern auch um einen von mehreren Sollanflugwegen auszuwählenden, zu dem Daten in dem Wegdatenspeicher gespeichert sind.

Die Rohdaten zu dem Sollanflugweg können mit Daten aus einer Navigationsdatenbank zu den FAS-Daten zu dem Sollanflugweg umgesetzt werden.

Das erfindungsgemäße Verfahren wird in einem Flugzeug durchgeführt. Dafür wird eine erfindungsgemäße Vorrichtung in dem Flugzeug installiert. Diese erfindungsgemäße, im Flugzeug installierte Vorrichtung überträgt die GLS-Datenpakete über die Funkdatenstrecke an die das GLS umsetzenden Teile des Flugzeugs. Die erfindungsgemäße Vorrichtung ist hiervon völlig getrennt.

Die erfindungsgemäße Vorrichtung zur Durchführung des erfindungsgemäßen Verfahrens weist einen Empfänger auf, der SBAS-Korrekturdaten für die Satellitennavigation von einem SBAS-Satelliten empfängt. Ein Converter ist vorgesehen, der die von dem Empfänger empfangenen SBAS-Korrekturdaten in GBAS-Korrekturdaten umwandelt. Ein Zusammenführer (Message Builder) ist vorgesehen, der die umgewandelten GBAS-Korrekturdaten mit FAS-Daten, welche einen Sollanflugweg eines Flugzeugs beschreiben, in GLS-Datenpakten zusammenführt. Ein Sender ist vorgesehen, der die GLS-Datenpakete über eine Funkstrecke für eine Satellitennavigation-basierte automatische Landung an das Flugzeug übermittelt.

Der Converter oder der Zusammenführer ergänzen Korrekturdaten, die bei den SBAS-Korrekturdaten für die Satellitennavigation gegenüber dem GBAS-Standard fehlen. Diese fehlenden Korrekturdaten können von einem Korrekturdatengenerator aus den vorhandenen SBAS-Korrekturdaten generiert werden.

Zum Bereitstellen von Rohdaten zu dem Sollanflugweg kann ein Wegdatenspeicher und/oder ein Wegdateneingabegerät vorhanden sein. Der Zusammenführer kann die Rohdaten zu dem Sollanflugweg zusammen mit Daten aus einer Navigationsdatenbank zu den FAS-Daten zu dem Sollanflugweg umsetzen.

Die ganze erfindungsgemäße Vorrichtung ist an Bord eines Flugzeugs angeordnet.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch andere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER \FIGUREN

Im Folgenden wird die Erfindung anhand in der Figur dargestellter bevorzugter Ausführungsbeispiele weiter erläutert und beschrieben.

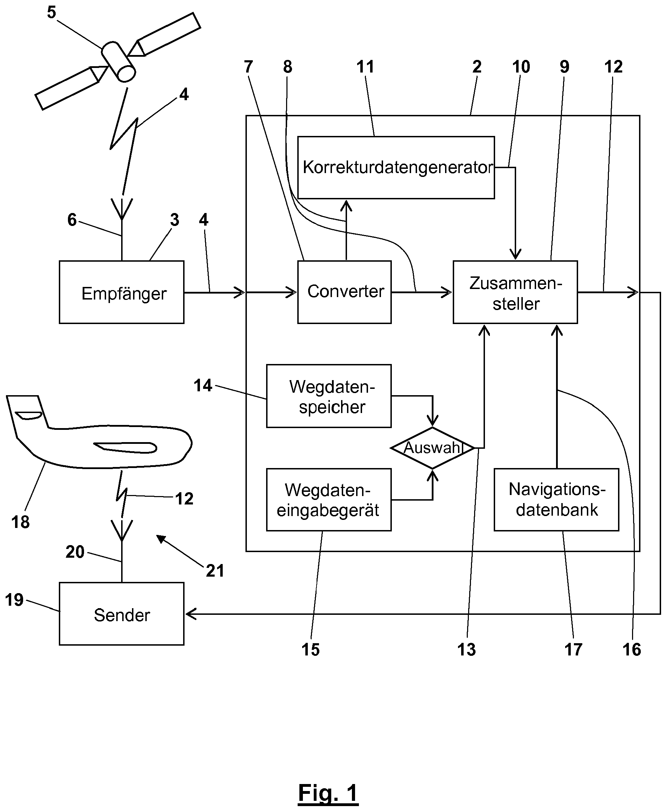

- **Fig. 1**: zeigt ein Blockdiagramm, das sowohl die Durchführung des erfindungsgemäßen Verfahrens als auch den Aufbau der erfindungsgemäßen Vorrichtung illustriert.

### FIGURENBESCHREIBUNG

Die in **Fig. 1** dargestellte Vorrichtung 1 weist eine Zentraleinheit 2 auf, an die ein Empfänger 3 und ein Sender 19 angeschlossen sind. Der Empfänger 3 empfängt SBAS-Korrekturdaten 4 nach SBAS (Satellite-Based Augmentation System)-Standard von einem SBAS-Satelliten 5. Der Empfänger 3 kann dazu eine gegenüber einer Standard-GNSS (Global Navigation Satellite System)-Antenne erweiterte Antenne 6 oder eine Spezialantenne nur für die SBAS-Korrekturdaten 4 aufweisen. Hier und im Folgenden wird nicht explizit zwischen den Signalen, die der Empfänger 3 mit der Antenne 6 von dem SBAS-Satelliten 5 empfängt, und den darin codierten SBAS-Korrekturdaten 4 unterschieden. Der Empfänger 3 übergibt die SBAS-Korrekturdaten 4 an die Zentraleinheit 2 der Vorrichtung 1. Dort werden sie von einem Converter 7 in GBAS-Korrekturdaten 8 nach GBAS-Standard umgewandelt. Diese GBAS-Korrekturdaten 8 gibt der Converter 7 an einen Zusammenführer 9 weiter. Der Zusammenführer 9 kann Korrekturdaten 10, die für vollständige Korrekturdaten nach GBAS-Standard fehlen, ergänzen. Der Zusammenführer 9 erhält diese fehlenden Korrekturdaten 10 von einem Korrekturdatengenerator 11, der sie aus den vorhandenen Korrekturdaten 8 generiert. Zu von dem Zusammenführer 9 zusammengestellten GLS (GBAS Landing System)-Datenpaketen 12 zählen auch FAS (Final Approach Segment)-Daten zu einem Sollanflugweg. Diese FAS-Daten werden aus Rohdaten 13, die je nach Auswahl von einem Wegdatenspeicher 14 oder einem Wegdateneingabegerät 15 stammen, und Daten 16 von einer Navigationsdatenbank 17 erstellt. Das Wegdateneingabegerät 15 kann die Rohdaten 13 auf Basis von grundlegenden Werten wie Anflugrichtung und Gleitwinkel bereitstellen, die über eine Benutzeroberfläche eingegeben werden. Die GLS-Datenpakete 12 werden von dem Zusammenführer 9 so zusammengestellt, dass sie eine GLS-Landung, d. h. eine Satellitennavigation-basierte automatische Landung eines Flugzeugs 18 ermöglichen, dem die Datenpakete 12 von dem Sender 19 übermittelt werden. Der Sender 19 weist dabei eine Antenne 20, insbesondere eine VHF-Antenne, auf, mit der die Datenpakete 12 nach GLS-Standard über eine Funkstrecke 21 an das Flugzeug 18 übertragen werden.

Da die Vorrichtung 1 im Flugzeug 18 selbst installiert ist, muss der Wegdatenspeicher Rohdaten 13 zu Sollanflugwegen zu allen von dem Flugzeug 18 angeflogenen Flughäfen umfassen, auf denen eine Satellitennavigation-basierte automatische Landung des Flugzeugs 18 möglich sein soll, oder für nichtberücksichtigte Flughäfen müssen geeignete Eingaben in das Wegdateneingabegerät 15 gemacht werden.

### BEZUGSZEICHENLISTE

- 1: Vorrichtung
- 2: Zentraleinheit
- 3: Empfänger
- 4: SBAS-Korrekturdaten
- 5: SBAS-Satellit
- 6: Antenne
- 7: Converter
- 8: GBAS-Korrekturdaten
- 9: Zusammenführer
- 10: Korrekturdaten
- 11: Korrekturdatengenerator
- 12: Datenpakete
- 13: Rohdaten
- 14: Wegdatenspeicher
- 15: Wegdateneingabegerät
- 16: Daten
- 17: Navigationsdatenbank
- 18: Flugzeug
- 19: Sender
- 20: Antenne
- 21: Funkstrecke

## Patentansprüche

1. Verfahren zum Bereitstellen von GLS (GBAS Landing System)-Datenpaketen (12) für eine Satellitennavigation-basierte automatische Landung an ein Flugzeug (18), wobei die GLS-Datenpakete (12) GBAS (Ground-Based Augmentation System)-Korrekturdaten (8, 10) für die Satellitennavigation und FAS (Final Approach Segment)-Daten, welche einen Sollanflugweg des Flugzeugs (18) beschreiben, umfassen und über eine Funkstrecke (21) an ein GLS umsetzende Teile des Flugzeugs (18) übermittelt werden,
- wobei SBAS (Satellite-Based Augmentation System)-Korrekturdaten (4) für die Satellitennavigation von einem SBAS-Satelliten (5) empfangen werden,
- wobei die empfangenen SBAS-Korrekturdaten (4) in GBAS-Korrekturdaten (8) umgewandelt werden und
- wobei die durch das Umwandeln erhaltenen GBAS-Korrekturdaten (8) mit den FAS-Daten zu dem Sollanflugweg in den GLS-Datenpaketen (12) zusammengeführt werden,
- wobei beim Umwandeln der SBAS-Korrekturdaten (4) in die GBAS-Korrekturdaten (8) Korrekturdaten (10) ergänzt werden, die bei den empfangenen SBAS-Korrekturdaten (4) gegenüber vollständigen GBAS-Korrekturdaten fehlen, und
- wobei die fehlenden Korrekturdaten (10) aus den empfangenen SBAS-Korrekturdaten (4) generiert werden,
**dadurch gekennzeichnet, dass** alle Verfahrensschritte in dem Flugzeug mit einer Vorrichtung (1) durchgeführt werden, die von den das GLS umsetzenden Teilen des Flugzeugs (18) getrennt ist.

2. Verfahren nach Anspruch 1, **dadurch gekennzeichnet, dass** Rohdaten (13) zu dem Sollanflugweg aus einem Wegdatenspeicher (14) oder von einem Wegdateneingabegerät (15) übernommen werden.

3. Verfahren nach Anspruch 2, **dadurch gekennzeichnet, dass** die Rohdaten (13) zu dem Sollanflugweg mit Daten (16) aus einer Navigationsdatenbank (17) zu den FAS-Daten umgesetzt werden.

4. Vorrichtung (1) zur Durchführung des Verfahren nach einem der vorhergehenden Ansprüche mit
- einem Zusammenführer (9), der GBAS-Korrekturdaten (8, 10) für die Satellitennavigation mit FAS-Daten, welche einen Sollanflugweg eines Flugzeugs (18) beschreiben, in GLS-Datenpaketen (12) für eine Satellitennavigation-basierte automatische Landung des Flugzeugs (18) zusammenführt,
- und einem Sender (19), der die GLS-Datenpakete (12) über eine Funkstrecke (21) an ein GLS umsetzende Teile des Flugzeugs (18) übermittelt,
- wobei ein Empfänger (3) vorhanden ist, der SBAS-Korrekturdaten (4) für die Satellitennavigation von einem SBAS-Satelliten (5) empfängt,
- wobei ein Converter (7) vorhanden ist, der die von dem Empfänger (3) empfangenen SBAS-Korrekturdaten (4) in GBAS-Korrekturdaten (8) umwandelt, und
- wobei der Zusammenführer (9) die von dem Converter (7) erhaltenen GBAS-Korrekturdaten (8) mit den FAS-Daten in den GLS-Datenpaketen (12) zusammenführt,
- wobei der Converter (7) oder der Zusammenführer (9) Korrekturdaten (10) ergänzt, die bei den empfangenen SBAS-Korrekturdaten (4) gegenüber vollständigen GBAS-Korrekturdaten fehlen, und
- wobei ein Korrekturdatengenerator (11) für die fehlenden Korrekturdaten (10) vorhanden ist, der die fehlenden Korrekturdaten (10) aus den empfangenen SBAS-Korrekturdaten (4) generiert,
**dadurch gekennzeichnet, dass** die Vorrichtung (1) an Bord des Flugzeugs (18) angeordnet und von den das GLS umsetzenden Teilen des Flugzeugs (18) getrennt ist.

5. Vorrichtung (1) nach Anspruch 4, **dadurch gekennzeichnet, dass** ein Wegdatenspeicher (14) und/oder ein Wegdateneingabegerät (15) zum Bereitstellen von Rohdaten (13) zu dem Sollanflugweg vorhanden sind/ist.

6. Vorrichtung (1) nach Anspruch 5, **dadurch gekennzeichnet, dass** der Zusammenführer (9) die Rohdaten (13) zu dem Sollanflugweg zusammen mit Daten (16) aus einer Navigationsdatenbank (17) zu den FAS-Daten umsetzt.

## Claims

1. Method of providing GLS (GBAS Landing System) data packets (12) for a satellite navigation-based automatic landing of an aircraft (18), wherein the GLS data packets (12) include GBAS (Ground-Based Augmentation System) correction data (8, 10) for the satellite navigation and FAS (Final Approach Segment) data which describe a set approach path of the aircraft (18), and are transmitted via a radio link (21) to parts of the aircraft (18) implementing a GLS,
- wherein SBAS (Satellite-Based Augmentation System) correction data (4) for the satellite navigation are received from a SBAS satellite (5),
- wherein the received SBAS correction data (4) are converted into GBAS correction data (8) and
- wherein the GBAS correction data (8) obtained from the converting are merged with the FAS data for the set approach path into the GLS data packets (12),
- wherein, in converting the SBAS correction data (4) into the GBAS correction data (8), correction data (10) are complemented which are missing in the received SBAS correction data (4) as compared to complete GBAS correction data, and
- wherein the missing correction data (10) are generated from the received SBAS correction data (4),
**characterized in that** all method steps are carried out by means of an apparatus 1 which is separated from the parts of the aircraft (18) implementing the GLS.

2. Method of claim 1, **characterized in that** raw data (13) for the set approach path are taken out of a path data storage (14) or from a path data input device (15).

3. Method of claim 2, **characterized in that** the raw data (13) for the set approach path are combined with data from a navigation data base (17) to form the FAS data.

4. Apparatus (1) for carrying out the method of any of the preceding claims, comprising
- a mergerer (9) merging GBAS correction data (8, 10) for the satellite navigation with FAS data, which describe a set approach path of an aircraft (18), into GLS data packets (12) for a satellite navigation-based automatic landing of the aircraft (18),
- and a transmitter (19) transmitting the GLS data packets (12) via radio link (21) to parts of the aircraft (18) implementing a GLS,
- wherein a receiver (3) is provided, which receives SBAS correction data (4) for the satellite navigation from an SBAS satellite (5),
- wherein a converter (7) is provided, which converts the SBAS correction data (4) received by the receiver (3) into GBAS correction data (8), and
- wherein the mergerer (9) merges the GBAS correction data (8) received from the converter (7) with the FAS data into the GLS data packets (12),
- wherein the converter (7) or the mergerer (9) complements correction data (10) which are missing in the received SBAS correction data (4) as compared to complete GBAS correction data, and
- wherein a correction data generator (12) for the correction data (10) is provided, which generates the missing correction data (10) from the received SBAS correction data (4),
**characterized in that** the apparatus (1) is arranged on board of the aircraft (18) and separated from the parts of the aircraft (18) implementing the GLS.

5. Apparatus (1) of claim 4, **characterized in that** a path data storage (14) and/or a path data input device (15) is/are present for providing raw data (13) for the set approach path.

6. Apparatus (1) of claim 5, **characterized in that** the merger (9) combines the raw data (13) for the set approach path with data (16) from a navigation data base (17) to form the FAS data.

## Revendications

1. Procédé de fourniture de paquets de données GLS (GBAS Landing System) (12) pour un atterrissage automatique basé sur une navigation par satellite à un avion (18), dans lequel les paquets de données GLS (12) comprennent des données de correction GBAS (Ground-Based Augmentation System) (8, 10) pour la navigation par satellite et des données FAS (Final Approach Segment), qui décrivent une trajectoire d'approche de consigne de l'avion (18), et sont transmises par l'intermédiaire d'une liaison radio (21) à des parties de l'avion (18) mettant en oeuvre un GLS,
- dans lequel des données de correction SBAS (Satellite-Based Augmentation System) (4) pour la navigation par satellite sont reçues par un satellite SBAS (5),
- dans lequel les données de correction SBAS (4) reçues sont converties en données de correction GBAS (8) et
- dans lequel les données de correction GBAS (8) obtenues par la conversion sont regroupées avec les données FAS afin d'obtenir la trajectoire d'approche dans les paquets de données GLS (12),
- dans lequel, lors de la conversion des données de correction SBAS (4) en données de correction GBAS (8), les données de correction (10), qui manquent dans les données de correction SBAS (4) reçues par rapport aux données de correction GBAS complètes, sont complétées et
- dans lequel les données de correction manquantes (10) sont générées à partir des données de correction SBAS (4) reçues,
**caractérisé en ce que** toutes les étapes du procédé sont exécutées dans l'avion avec un dispositif (1) qui est distinct des parties de l'avion (18) mettant en oeuvre le GLS.

2. Procédé selon la revendication 1, **caractérisé en ce que** des données brutes (13) concernant la trajectoire d'approche sont prélevées dans une mémoire de données de trajectoires (14) ou dans un appareil d'entrée de données de trajectoires (15).

3. Procédé selon la revendication 2, **caractérisé en ce que** les données brutes (13) concernant la trajectoire d'approche sont converties en données FAS avec des données (16) provenant d'une base de données de navigation (17).

4. Dispositif (1) pour l'exécution du procédé selon l'une des revendications précédentes, avec
- un dispositif de regroupement (9) qui regroupe les données de correction GBAS (8, 10) pour la navigation par satellite avec des données FAS, qui décrivent une trajectoire d'approche d'un avion (18), en paquets de données GLS (12) pour un atterrissage automatique basé sur une navigation par satellite de l'avion (18),
- et un émetteur (19), qui transmet les paquets de données GLS (12) par l'intermédiaire d'une liaison radio (21) à des parties de l'avion (18) mettant en oeuvre un GLS,
- dans lequel un récepteur (3) est prévu, qui reçoit des données de correction SBAS (4) pour la navigation par satellite provenant d'un satellite SBAS (5),
- dans lequel un convertisseur (7) est prévu, qui convertit les données de correction SBAS (4) reçues par le récepteur (3) en données de correction GBAS (8) et
- dans lequel le dispositif de regroupement (9) regroupe les données de correction GBAS (8) obtenues par le convertisseur (7) avec les données FAS dans les paquets de données GLS (12),
- dans lequel le convertisseur (7) ou le dispositif de regroupement (9) complète les données de correction (10) qui manquent dans les données de correction SBAS (4) reçues par rapport aux données de correction GBAS et
- dans lequel un générateur de données de correction (11) pour les données de correction (10) manquantes est prévu qui génère les données de correction (10) manquantes à partir des données de correction SBAS (4) reçues,
**caractérisé en ce que** le dispositif (1) est disposé à bord de l'avion (18) et est distinct des parties de l'avion (18) mettant en oeuvre le GLS.

5. Dispositif (1) selon la revendication 4, **caractérisé en ce qu'**une mémoire de données de trajectoire (14) et/ou un appareil d'entrée de données de trajectoire (15) est/sont prévu(s) pour la fourniture de données brutes (13) à la trajectoire d'approche.

6. Dispositif (1) selon la revendication 5, **caractérisé en ce que** le dispositif de regroupement (9) convertit les données brutes (13) concernant la trajectoire d'approche, conjointement avec des données (16) provenant d'une base de données de navigation (17), en données FAS.
